# DEMANDE DE BREVET EUROPEEN

(11) **EP 0 619 481 A1**
(43) Date de publication de la demande: **12.10.1994**
(21) Numéro de dépôt: 94400708.7
(22) Date de dépôt: 31.03.1994
(51) Int. Cl.: G01N 21/25, G02B 26/02

(54) **Dispositif de mesure à fibres optiques**

(30) Priorité: 06.04.1993 FR 9304050
(71) Demandeur: COMMISSARIAT A L'ENERGIE ATOMIQUE, F-75015 Paris (FR); COGEMA COMPAGNIE GENERALE DES MATIERES NUCLEAIRES, F-78141 Velizy-Villacoublay (FR)
(72) Inventeur: Dureault, Bernard, F-75016 Paris (FR); Lordet, Jacques, F-94100 Saint Maur (FR); Bonnejean, Claude, F-91080 Courcouronnes (FR)
(74) Mandataire: Dubois-Chabert, Guy

(57) **Abrégé**

Ce dispositif comprend au moins un ensemble de fibres optiques (24) reliées à des cellules de mesure, au moins une fibre optique auxiliaire (30), et au moins un organe de sélection reliant celle-ci à l'ensemble et prévu pour établir sélectivement une liaison entre cette fibre et l'une des fibres de l'ensemble. L'organe de sélection comprend des moyens optiques (32, 34) pour établir la liaison entre l'ensemble et la fibre auxiliaire, et des obturateurs escamotables (36) associés aux fibres de l'ensemble et prévus pour obturer les extrémités de ces fibres aboutissant à cet organe. Application en chimie nucléaire.

## Description

La présente invention concerne un dispositif de mesure optique, notamment par spectrophotométrie.

L'invention s'applique notamment en chimie nucléaire.

Lors de mesures spectrophotométriques dans le domaine ultraviolet, le domaine visible ou le domaine infrarouge, on utilise des appareils dans lesquels des échantillons à analyser sont placés dans des cellules de mesure et sont traversés par un faisceau ultraviolet, visible ou infrarouge.

Dans certains cas, il est difficile, voire impossible, de transférer les échantillons dans ces cellules de mesure.

C'est par exemple le cas des mesures effectuées dans des enceintes blindées avec des solutions radioactives.

Il est souvent impossible ou en tout cas délicat d'implanter les appareils dans de telles enceintes.

On a développé un dispositif de couplage optique qui permet de faire transiter le faisceau lumineux depuis un spectrophotomètre jusqu'à un échantillon à mesurer puis de retourner ce faisceau lumineux jusqu'au spectrophotomètre après qu'il ait traversé l'échantillon.

Ce dispositif est un assemblage assez complexe de composants et de fibres optiques.

Il ne permet d'effectuer une mesure qu'en un seul point (c'est-à-dire pour un seul échantillon).

Il est parfois intéressant, afin d'utiliser au mieux les instruments de mesure, d'effectuer ces mesures en plusieurs points avec le même appareil.

Pour ce faire, on a conçu un équipement qui utilise des composants optiques mobiles dont la fonction est de dévier un faisceau lumineux.

Cette équipement est connu par le document suivant auquel on se reportera :

EP-A-0 177 387 (voir aussi US-A-4,820,045).

Cet équipement connu pose un problème de reproductibilité des mesures du fait que le positionnement des composants optiques mobiles qu'il comporte n'est pas parfaitement reproductible.

La présente invention vise à résoudre ce problème et, pour ce faire, on supprime, conformément à l'invention, tout mouvement de composant optique intervenant dans l'orientation d'un faisceau lumineux de mesure.

De façon précise, la présente invention a pour objet un dispositif de mesure optique, notamment par spectrophotométrie, ce dispositif comprenant :
- au moins un ensemble de fibres optiques respectivement reliées à des cellules de mesure,
- au moins une fibre optique auxiliaire, et
- au moins un organe de sélection qui relie cette fibre optique auxiliaire à l'ensemble de fibres optiques et qui est prévu pour établir sélectivement une liaison optique entre cette fibre optique auxiliaire et l'une des fibres optiques de l'ensemble,

de manière à analyser sélectivement la lumière provenant de l'une des cellules de mesure, par des moyens d'analyse reliés à la fibre optique auxiliaire, ou à envoyer sélectivement de la lumière transmise par cette fibre optique auxiliaire dans l'une des cellules de mesure,
ce dispositif étant caractérisé en ce que l'organe de sélection comprend :
- des moyens optiques fixes prévus pour établir une liaison optique entre l'ensemble de fibres optiques et la fibre optique auxiliaire, et
- des obturateurs escamotables respectivement associés aux fibres optiques de l'ensemble et prévus pour obturer les extrémités de ces fibres optiques qui aboutissent à l'organe de sélection.

Dans la présente invention, les trajets respectifs des faisceaux lumineux correspondant aux cellules de mesure sont figés une fois pour toutes par construction.

Les seules pièces mobiles sont les obturateurs qui n'ont aucune incidence sur l'orientation des faisceaux lumineux.

Tout risque de déréglage du dispositif est ainsi supprimé.

De plus, lors d'une mesure, toutes les voies de mesure, sauf celle sur laquelle on fait la mesure, sont occultées par les obturateurs correspondants de sorte que tout risque d'interférence entre une voie et une autre est supprimé.

Selon un mode de réalisation particulier du dispositif objet de l'invention, ce dispositif comprend :
- une première fibre optique auxiliaire,
- un premier ensemble de fibres optiques respectivement reliées aux cellules de mesure,
- un premier organe de sélection qui relie la première fibre optique auxiliaire à ce premier ensemble,
- un deuxième ensemble de fibres optiques respectivement reliées aux cellules de mesure,
- une deuxième fibre optique auxiliaire,
- un deuxième organe de sélection qui relie cette deuxième fibre optique auxiliaire au deuxième ensemble, et
- des moyens de commande simultanée des obturateurs des premier et deuxième organes de sélection,

de manière à pouvoir escamoter simultanément les obturateurs correspondant à une cellule de mesure pour envoyer à travers celle-ci une lumière transmise par la première fibre optique auxiliaire et récupérer la lumière sortant de cette cellule, par l'intermédiaire de la deuxième fibre optique auxiliaire, en vue d'analyser cette lumière.

Lesdits moyens optiques fixes peuvent comprendre :
- une pluralité d'optiques fixes qui sont respectivement associées aux fibres optiques de l'ensemble correspondant et qui sont aptes à transformer des faisceaux lumineux divergents issus de ces fibres optiques en faisceaux lumineux à rayons parallèles, et
- un système optique fixe apte à focaliser ces faisceaux lumineux à rayons parallèles sur l'extrémité de la fibre optique auxiliaire correspondante.

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un équipement connu permettant d'effectuer des mesures en plusieurs points,
- la figure 2 est une vue schématique d'un mode de réalisation particulier du dispositif de mesure optique objet de la présente invention, et
- la figure 3 est une vue schématique d'un autre mode de réalisation particulier du dispositif objet de l'invention.

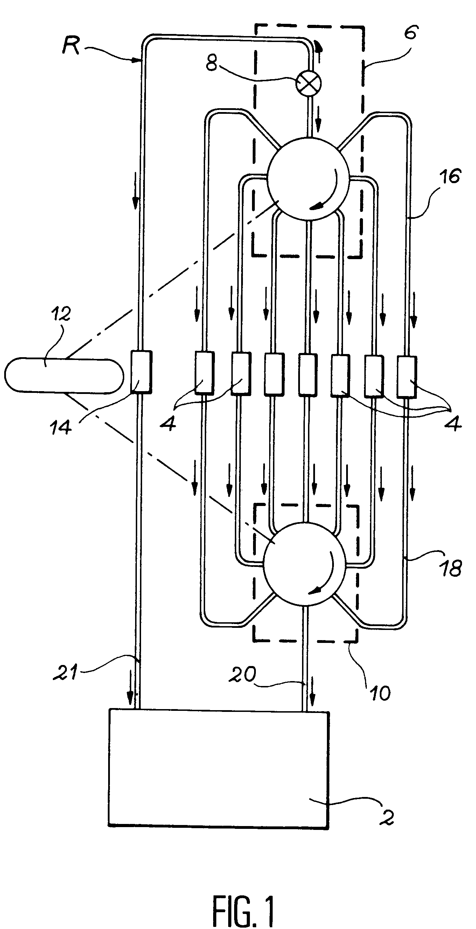

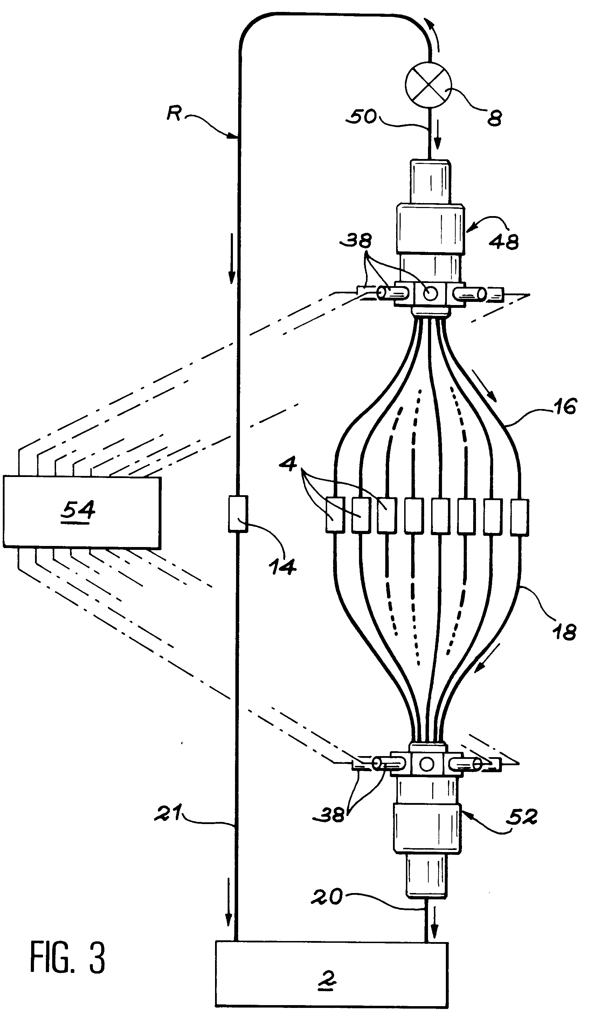

La figure 1 est une vue schématique d'un équipement connu permettant, à l'aide d'un spectrophotomètre courant du commerce référencé 2, de surveiller des cellules de mesure 4 de façon séquentielle, à l'aide de deux systèmes rotatifs du type à barillet qui sont décrits dans le document mentionné plus haut (la figure 1 de la présente demande correspondant à la figure 3 de ce document).

Le premier système à barillet, qui porte la référence 6, comporte une source lumineuse 8 et le second système à barillet porte la référence 10 et ne comporte pas de source lumineuse.

Ces deux systèmes rotatifs à barillet 6 et 10 sont montés dos à dos sur un même axe de rotation et sont ainsi couplés mécaniquement en rotation par un dispositif schématisé en 12.

La voie de référence R éclaire en permanence la cellule de référence 14 destinée au contrôle de turbidité et le système rotatif 6 aiguille la lumière successivement vers l'une des fibres optiques 16 conduisant chacune à l'une des cellules de mesure 4.

En sortie de celles-ci, des fibres optiques 18 adressent la lumière vers le deuxième système rotatif 10, puis en sortie de celui-ci, sur la voie 20 de mesure du spectrophotomètre 2.

Comme on le voit sur la figure 1, les deux système rotatifs à barillet 6 et 10 couplés en rotation assurent séquentiellement la continuité lumineuse de l'une des voies de mesure entre la source émettrice 8 et la voie de mesure 20 du spectrophotomètre 2.

Chacun des deux systèmes 6 et 10 est parcouru par la lumière selon des sens opposés, puisque les entrées de l'un correspondent exactement aux sorties de l'autre.

On voit aussi sur la figure 1 la voie de référence 21 du spectrophotomètre 2 qui reçoit par celle-ci la lumière issue de la cellule de référence 14.

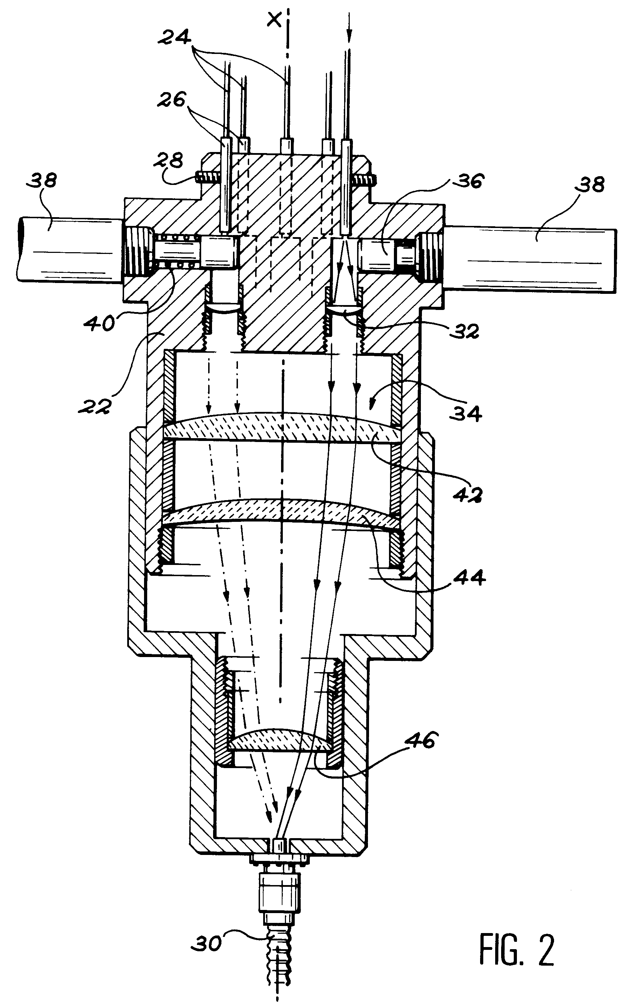

Le dispositif conforme à l'invention, qui est schématiquement représenté sur la figure 2, comprend un boîtier cylindrique 22 dont l'axe est référencé X.

Des fibres optiques 24, qui sont susceptibles de transporter des faisceaux lumineux issus de cellules de mesure non représentées, sont munies d'embouts 26 en leur extrémité et ces embouts 26 sont parallèles à l'axe X, sont équidistants de cet axe et sont fixés à une face du boîtier 22, par l'intermédiaire de vis 28, comme on le voit sur la figure 2.

Le dispositif représenté sur cette figure 2 comprend également une fibre optique auxiliaire 30 qui est fixée sur la face opposée du boîtier 22 et dont l'axe est confondu avec l'axe X de ce boîtier 22.

Le dispositif représenté sur la figure 2 comprend aussi des optiques fixes 32 qui sont par exemple des lentilles plan-convexes, et qui sont prévues pour transformer en faisceaux à rayons parallèles des faisceaux divergents issus des fibres optiques 24.

Ces optiques 32 sont respectivement associées aux fibres optiques 24 et sont toutes placées dans le boîtier 22, dans un même plan perpendiculaire à l'axe X de ce boîtier et à équidistance de cet axe X.

Le dispositif de la figure 2 comprend en outre dans le boîtier 22, un système optique fixe 34 dont l'axe optique est également l'axe X et qui est placé entre les optiques 32 et la fibre optique auxiliaire 30.

Ce système optique 34 a pour fonction de focaliser les faisceaux lumineux à rayons parallèles issus des optiques 32 sur la face d'extrémité de la fibre optique auxiliaire 30.

Dans une telle configuration, tous les signaux lumineux émis par les fibres optiques 24 sont propagés dans la fibre optique auxiliaire 30 ou fibre optique de sortie.

Conformément à l'invention, le dispositif de la figure 2 comprend aussi des obturateurs 36 qui sont respectivement associés aux fibres optiques 24 et qui permettent d'analyser un seul de ces signaux.

Chaque obturateur 36 est placé entre la face d'extrémité de la fibre optique 24 correspondante et l'optique 32 correspondante.

De plus, ces obturateurs 36 sont respectivement commandés par des moyens appropriés comme par exemple des électro-aimants 38 qui, lorsqu'ils reçoivent des courants électriques d'activation de la part de moyens de commande appropriés non représentés, escamotent les obturateurs 36 correspondants, alors que lorsque ces électroaimants 38 sont désactivés, les obturateurs 36 reprennent leurs positions dans lesquelles les faces d'extrémité des fibres 24 sont occultées.

On voit sur la figure 2 des ressorts 40 qui repoussent les obturateurs 36 dans leurs positions d'occultation lorsque les électro-aimants correspondants sont désactivés alors que, lorsque ces derniers sont activés, les obturateurs 36 sont écartés des faces d'extrémité des fibres optiques correspondantes et ces ressorts 40 sont comprimés.

Pour réaliser une mesure sur une voie correspondant à l'une des fibres optiques 24, on occulte les faces des extrémités des autres fibres 24, grâce aux obturateurs correspondants 36, en laissant escamoter l'obturateur correspondant à la fibre avec laquelle on réalise la mesure et, lorsque cette mesure est réalisée, on occulte la face de l'extrémité de cette fibre et l'on escamote l'obturateur 36 de l'une des autres fibres 24 pour faire une mesure avec celle-ci et ainsi de suite.

Dans l'exemple représenté sur la figure 2, le système optique 34 comprend successivement une lentille plan-convexe 42 qui est placée en regard des optiques 32, une lentille ménisque 44 et une autre lentille plan-convexe 46 qui est placée en regard de la face d'extrémité de la fibre optique auxiliaire 30, les lentilles 42, 44 et 46 ayant comme axe optique commun l'axe X.

Dans une variante de réalisation non représentée, on remplace la lentille plan-convexe 42 par un doublet optique.

Chacun des objectifs 32 pourrait également être constitué par un doublet optique au lieu d'une lentille plan-convexe.

Compte tenu du principe du retour inverse de la lumière, on conçoit que le dispositif représenté sur la figure 2 puisse être utilisé en sens contraire : dans ce cas, c'est la fibre 30 qui est la fibre d'entrée et les fibres 24 sont des fibres de sortie.

Plus précisément, ce dispositif de la figure 2 est utilisable pour envoyer une lumière à partir de la fibre optique 30, sélectivement dans les fibres optiques 24 qui sont encore reliées à des cellules de mesure, de sorte que seule l'une de ces cellules reçoit la lumière issue de la fibre optique 30 par l'intermédiaire du système optique 34 et de l'optique 32 correspondante, l'obturateur 36 correspondant étant escamoté tandis que les autres obturateurs 36 obturent les faces d'extrémité des autres fibres optiques 24.

Le dispositif conforme à l'invention, qui est schématiquement représenté sur la figure 3, est l'homologue de l'équipement qui est schématiquement représenté sur la figure 1 mais les systèmes rotatifs sont, dans le cas de la figure 3, remplacés par des organes de sélection du genre de celui de la figure 2 (et, dans l'exemple de la figure 3, il y a huit cellules de mesure alors qu'il y en a sept sur la figure 1).

Plus précisément, on voit sur la figure 3 un premier organe de sélection 48 qui reçoit, par l'intermédiaire d'une fibre optique 50, la lumière issue de la source 8 et qui permet d'orienter sélectivement cette lumière vers l'une des fibres optiques 16 de sorte que cette lumière atteint l'une des cellules de mesure 4 et se propage ensuite dans la fibre optique 18 correspondante pour atteindre un deuxième système de sélection 52 dont les obturateurs sont positionnés pour permettre à cette lumière d'atteindre la fibre optique de sortie 20 correspondante puis le spectrophotomètre 2.

Le dispositif schématiquement représenté sur la figure 3 comprend également des moyens 54 de commande des divers électro-aimants 38 utilisés dont les obturateurs correspondants sont normalement fermés.

Pour effectuer une mesure sur l'une des voies de mesure, on active avec les moyens de commande 54 deux des électro-aimants, ces deux électro-aimants appartenant respectivement aux organes de sélection 48 et 52 et correspondant à la voie de mesure choisie.

Ainsi les deux obturateurs correspondants sont escamotés et la lumière émise par la source 8 parvient à la fibre optique 20, et donc au spectrophotomètre 2, en traversant la cellule de mesure correspondante 4.

## Revendications

1. Dispositif de mesure optique, notamment par spectrophotométrie, ce dispositif comprenant :
- au moins un ensemble de fibres optiques (24, 16, 18) respectivement reliées à des cellules de mesure (4),
- au moins une fibre optique auxiliaire (30, 50, 20), et
- au moins un organe de sélection (48, 52) qui relie cette fibre optique auxiliaire à l'ensemble de fibres optiques et qui est prévu pour établir sélectivement une liaison optique entre cette fibre optique auxiliaire et l'une des fibres optiques de l'ensemble,
de manière à analyser sélectivement la lumière provenant de l'une des cellules de mesure, par des moyens d'analyse reliés à la fibre optique auxiliaire, ou à envoyer sélectivement de la lumière transmise par cette fibre optique auxiliaire dans l'une des cellules de mesure,
ce dispositif étant caractérisé en ce que l'organe de sélection comprend :
- des moyens optiques fixes (32, 34) prévus pour établir une liaison optique entre l'ensemble de fibres optiques (24, 16, 18) et la fibre optique auxiliaire (30, 50, 20), et
- des obturateurs escamotables (36) respectivement associés aux fibres optiques de l'ensemble et prévus pour obturer les extrémités de ces fibres optiques qui aboutissent à l'organe de sélection.

2. Dispositif selon la revendication 1, caractérisé en ce qu'il comprend :
- une première fibre optique auxiliaire (50),
- un premier ensemble de fibres optiques (16) respectivement reliées aux cellules de mesure (4),
- un premier organe de sélection (48) qui relie la première fibre optique auxiliaire (50) à ce premier ensemble,
- un deuxième ensemble de fibres optique (18) respectivement reliées aux cellules de mesure (4),
- une deuxième fibre optique auxiliaire (20),
- un deuxième organe de sélection (52) qui relie cette deuxième fibre optique auxiliaire (20) au deuxième ensemble, et
- des moyens (54) de commande simultanée des obturateurs (36) des premier (48) et deuxième (52) organes de sélection,
de manière à pouvoir escamoter simultanément les obturateurs correspondant à une cellule de mesure pour envoyer à travers celle-ci une lumière transmise par la première fibre optique auxiliaire et récupérer la lumière sortant de cette cellule, par l'intermédiaire de la deuxième fibre optique auxiliaire, en vue d'analyser cette lumière.

3. Dispositif selon l'une quelconque des revendications 1 et 2, caractérisé en ce que lesdits moyens optiques fixes comprennent :
- une pluralité d'optiques fixes (32) qui sont respectivement associées aux fibres optiques (24) de l'ensemble correspondant et qui sont aptes à transformer des faisceaux lumineux divergents issus de ces fibres optiques en faisceaux lumineux à rayons parallèles, et
- un système optique fixe (34) apte à focaliser ces faisceaux lumineux à rayons parallèles sur l'extrémité de la fibre optique auxiliaire correspondante (30).
